Europäisches Patentamt

European Patent Office

Office européen des brevets

(11) Publication number: **0 094 454**
**B1**

(12) **EUROPEAN PATENT SPECIFICATION**

(45) Date of publication of patent specification: **29.07.87**

(51) Int. Cl.⁴: **F 16 L 3/18**

(21) Application number: **82111862.7**

(22) Date of filing: **21.12.82**

(54) **Thermally self-stressing rigid link support.**

(30) Priority: **14.05.82 US 378447**

(43) Date of publication of application:
**23.11.83 Bulletin 83/47**

(45) Publication of the grant of the patent:
**29.07.87 Bulletin 87/31**

(84) Designated Contracting States:
**BE DE FR GB IT SE**

(56) References cited:
**EP-A-0 031 767**
**GB-A- 594 232**
**US-A-1 466 292**

(73) Proprietor: **WESTINGHOUSE ELECTRIC
CORPORATION
Westinghouse Building Gateway Center
Pittsburgh Pennsylvania 15222 (US)**

(72) Inventor: **Brussalis, William George, Jr.
RD 3, Box 252 A
Monongahela Pennsylvania (US)**

(74) Representative: **Fleuchaus, Leo, Dipl.-Ing. et al
Fleuchaus & Wehser Melchiorstrasse 42
D-8000 München 71 (DE)**

Courier Press, Leamington Spa, England.

## Description

This invention relates in general to a device for supporting and/or controlling movement of equipment, especially piping, subject to changes in position due to thermal expansion and contraction.

Pipes are often supported by hangers and snubbers such that the pipe may move freely if movement is slow, but rapid movement of the pipe is resisted. Such a support is disclosed in EP—A1—31767. Many other devices exist which support piping systems, which devices accommodate changes in pipe dimensions due to thermal heat-up and cool-down.

In particular, GB—A—594 232 discloses a support which maintains the alignment of the axis of a pipe despite small movements which may take place in an axial direction. The support comprises links pivoted to a supporting structure and also pivoted respectively on the pipe at points spaced around an axis of the pipe. Each link is disposed in a plane normal to the axis at a right-angle to the radius from the axis of its pivot point on the pipe and further extends from its pivot point on the pipe in the same sense as all the other links around the pipe axis.

Most support devices accommodating certain pipe movements, however, are complicated, and therefore costly. They are also subject to failure, and may require routine maintenance and testing.

It is the principal object of the present invention to provide a pipe support arrangement which adapts to substantial changes in pipe length without unduly stressing the pipe and which also provides for minimal stress at the point of connection of the pipe to the associated equipment.

With this object in view, the present invention resides in a support arrangement for a pipe connected to equipment at a predetermined point which is subject to position changes depending on the temperature of the equipment and the pipe said support arrangement including rigid links pivotally connected to said pipe at axially spaced locations and to a support structure adjacent said pipe for supporting said pipe thereon, characterized in that the lenth and angular position of each link relative to said pipe is so selected that axial movement of said pipe will cause said links to apply stresses to said pipe so as to force said pipe into a shape such that the end of said pipe connected to said equipment follows closely the movement of said equipment at the point of connection thereby to provide for relatively low stresses at said point of connection of said pipe to said equipment and avoids stress peaks throughout said pipe and that at least one of said links has a lost-motion connection with opposite end positions, the length of said lost motion connection being less than the respective pipe movement so that support forces are applied to said pipe through said link at equipment operating temperature through one end position of said lost-motion connection and at equipment shut-down temperature through the other end position of said lost-motion connection.

A rigid-link pipe support consists of a rigid link pivotally joined at one end to the pipe and similarly joined at the other end to a stationary anchor. During pipe/equipment movement, the link may pivot at both points. The rigid link support is planned in advance of installation to use the forces and displacements generated by movement and dimensional changes in the pipe during pipe temperature changes to stress and/or pivot the rigid link such that the pipe is properly stressed and supported when at its long term operating temperature. The rigid link support does not merely accommodate thermal movement of the pipe, but utilizes such movement to regulate pipe stresses and to generate forces opposing further movement of the pipe.

The rigid link support prevents pipe/equipment movement along the length of the link and opposes motion in other directions by forcing any such motion to include an additional directional component imposed by a push or pull by the link.

It is not necessary that a rigid link be stressed at the operating temperature, but may, in fact, be planned to be then unstressed. Such a link would still prevent pipe/equipment movement along the link length and would also oppose other additional pipe movements.

Installation of the rigid link support can be planned such that the pipe/equipment is forced out of its natural free position at either or both operating and room temperatures, creating stress in and support for the pipe/equipment termed "springing".

· The rigid link support is particularly adaptable to steam stations and refrigeration apparatus since piping therein is normally operated at a constant, known, elevated or reduced temperature.

The invention will become more readily apparent from the following description of a preferred embodiment thereof shown, by way of example only, in the accompanying drawings, in which:

Figure 1 illustrates a pipe at room temperature;

Figure 2 is a view in side elevation of a rigid link support cooperatively associated with piping, shown in a stressed room temperature condition:

Figure 3 shows the configuration change which occurs from Figure 2 when the pipe changes temperature;

Figure 4 is a view in side elevation of a rigid link support cooperatively associated with piping at room temperature;

Figure 5 relates to Figure 4, showing the configuration change which occurs from Figure 4 when the pipe changes temperature;

Figure 6 is a schematic showing a piping system supported by a combination of rigid link supports with snubbers;

Figure 7 is a graph of the vertical pipe displacement for the system shown in Figure 6;

Figure 8 is a schematic of a slotted rigid link support shown in association with vertical piping;

Figures 9 and 10 relate to Figure 8, showing the configuration change which occurs when the pipe changes temperature;

Figure 11 shows an example of a variable length rigid link support;

Figures 12, 13, 14, 15 and 16 are schematics of a support arrangement for piping between a pump and heat exchanger; and

Figure 17 is a schematic of a support showing the shifting during heatup.

The pipe support has a rigid link pivotally connected at one end to a pipe mount and pivotally connected at the opposite end to an anchor mount on a structure suitable as an anchor for the support of the pipe so that the length, and angle of installation of the link with respect to the pipe chosen at a room temperature are such that movement of the pipe due to thermal heatup or cooldown causes pivotal movement of the link so as to position the pipe in a manner to avoid stress peaks.

The rigid link support may be installed with appropriate link length and angle with respect to the pipe such that pipe and link stresses exist at room temperature. This condition is called "RT sprung" herein.

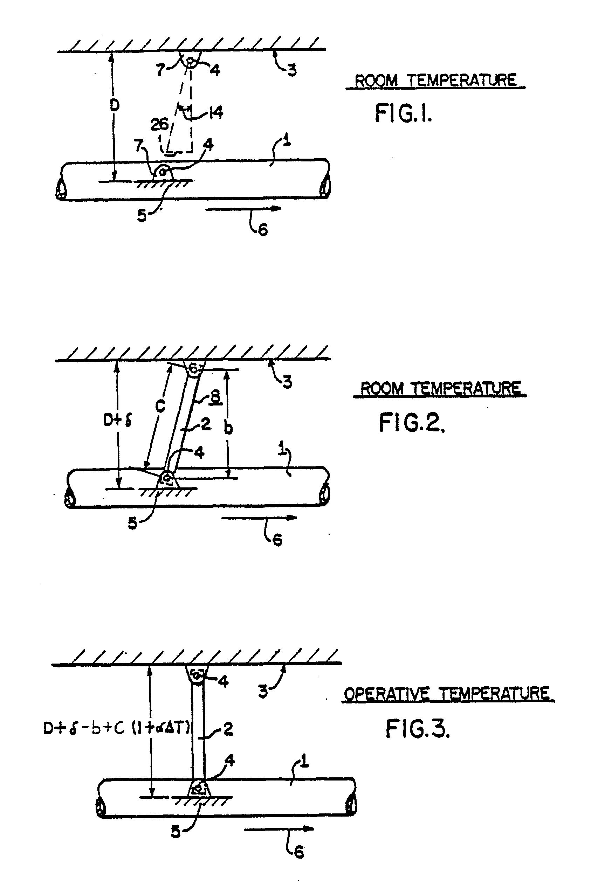

Figure 1 shows a pipe 1 at room temperature for which support is to be provided. Mounts 7 are shown installed to anchor 3 and pipe 1. Pins 4 are provided for attachment of a rigid link (not shown).

It is assumed that it is known by analysis of the system of which pipe 1 is a part that the thermal change from room temperature to the pipe 1 operating temperature, be it hotter or colder, causes movement of the pipe 1 to the right in the direction of arrow 6.

In Figure 2, link 2 is shown installed. Pipe 1 is still at room temperature, but due to the length of link 2 being greater than the distance between pins 4 in Figure 1, installation of link 2 as shown in Figure 2 has pushed pipe 1 downward. Consequently the distance between pipe 1 and anchor surface 3 has increased a distance $\delta$ from Figure 1 and both rigid link 2 and pipe 1 are under stress and are RT sprung.

Refer to Figure 3 which shows the system in the configuration resulting from a thermal change of pipe 1 from room temperature to operating temperature. Pipe 1 has shifted in the direction of arrow 6 (in Figure 2) and has pivoted at pins 4, pushing pipe 1 downward by a distance equal to C, the length of link 2, less the distance b which is a side of a right triangle of which C is the hypotenuse as illustrated in Figure 2.

Pipe 1 is also pushed down a small distance additionally due to any rigid link 2 thermal expansion (or, if link 2 is cooled during the thermal change which occurs to the operating temperature, this effect reduces the distance pipe 1 is pushed down). The change in rigid link 2 length is expressed as $\alpha\Delta T$ where $\alpha$ is the coefficient of expansion (of link 2) and $\Delta T$ is the temperature change of link 2 from room temperature to the operating temperature, of link 2 ($\Delta T$ may be a positive or negative quantity. The exact details of this calculation depends on the overall configuration involving the supports and the building as well as the temperature and expansion coefficients of the building, link, and mounts.) Pipe radial growth is not important when pipe 1 is supported as in Figure 3.

In Figure 3, pipe 1 is shown to be pushed down to a distance $D+\delta-b+c. (1+\alpha\Delta T)$ from anchor surface 3.

The distance pipe 1 shifts (along arrow 6) for a specific $\Delta T$ is often a known quantity. This shift distance is represented by a dotted line 26 in Figure 1. Angle 14 (in Fig. 1) and link 2 length can be chosen such that the stress in link 2 and pipe 1 in the configuration shown in Figure 3 at the pipe 1 operating temperature is an acceptable and desired value.

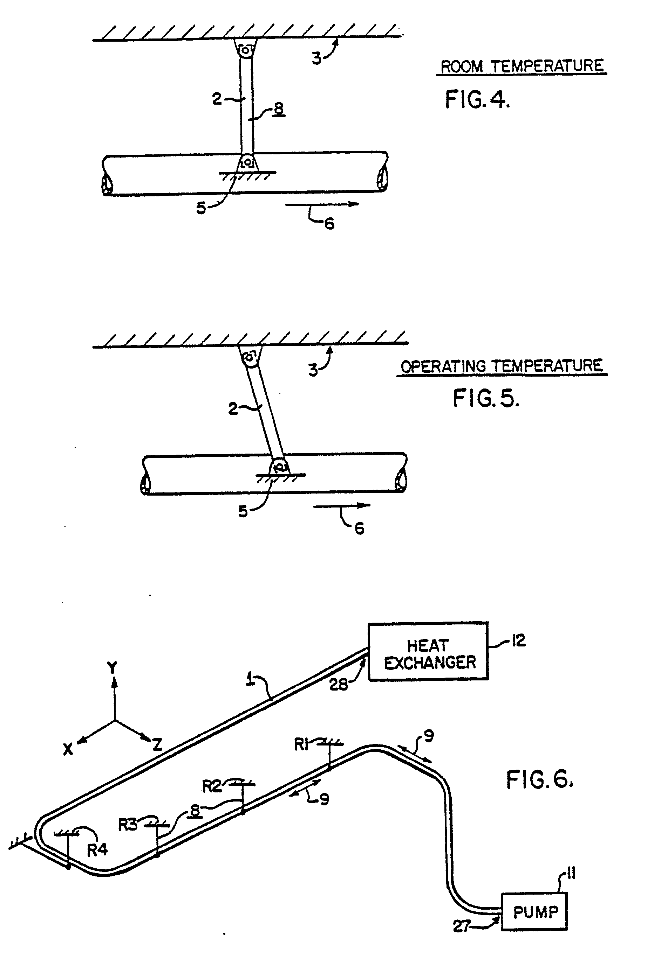

The configuration depicted in Figures 1, 2, and 3 is appropriate to *push* pipe 1 further away from anchor surface 3 during heatup (or cooldown). The rigid link support system can also be arranged to *pull* pipe 1 closer to anchor surface 3 during heatup (or cooldown) as illustrated in Figures 4 and 5. Figure 4 shows an installed rigid link support 8 for a pipe 1 at room temperature. If pipe 1 is pulled upward somewhat by link 2 in Figure 4 it is RT sprung. Pipe 1 is known to move to the right in the direction of arrow 6 during a temperature change to the operating temperature (shown in Figure 5).

As shown in Figure 5, movements of pipe 1 to the right causes link 2 to lift pipe 1 generating stress in pipe 1 and strain in link 2, these being appropriate to support pipe 1. If link 2 lifts pipe 1 more than any possible natural lifting of pipe 1 due to the thermal change, then the stress in link 2 will be tensile.

If pipe 1 is caused to move upward toward anchor surface 3 a distance greater than link 2 allows as pipe 1 moves to the right by the temperature change, then compressive stress could be generated in link 2.

A pipe or system of pipes may be supported by a plurality of rigid link supports, of the "push" variety (see Figures 1, 2, 3) and/or "pull" variety (see Figures 4, 5) or a combination of these with other types of pipe supports. Figure 6 illustrates a system designed to support pipe 1 with rigid link supports 8, and snubbers 9. Pipe 1 connects a pump 11 and a heat exchanger 12. Such a system can be planned prior to construction of the piping system with each rigid link support 8 providing push or pull needed at various locations such that the overall pipe is properly supported in the operating condition as well as during transient or short term operating conditions. Combination with other support types may be desired as these may serve special functions such as earthquake protection.

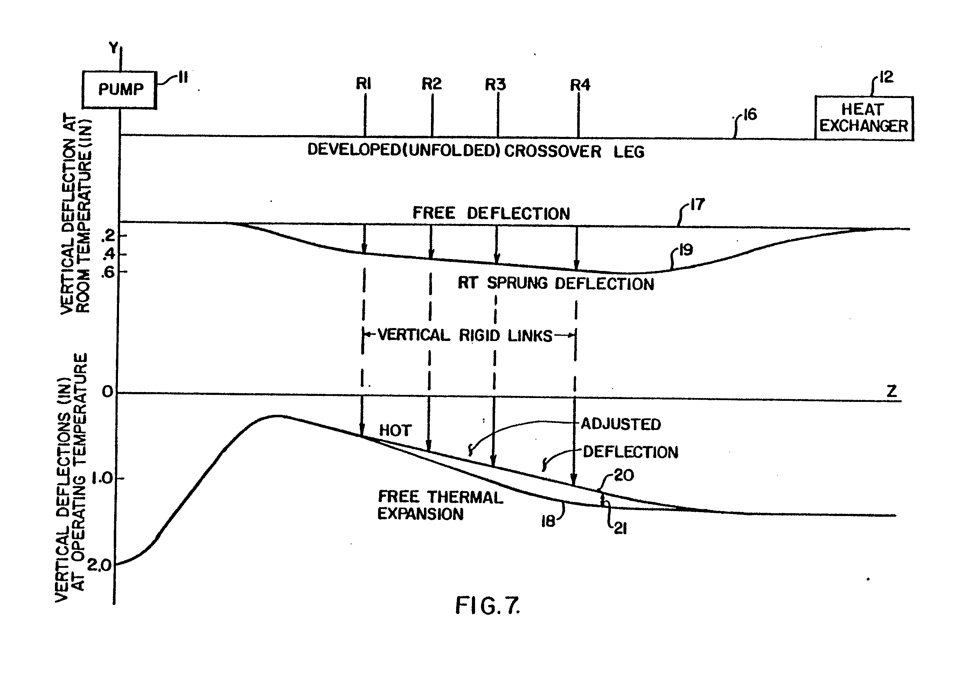

Figure 7 is a graph which illustrates the use of multiple rigid link supports 8 to support the piping system shown in Figure 6. Pipe 1 is shown stretched out straight for purposes of this analysis along line 16 which also has pump 11 and heat exchanger 12 positions indicated. Snubbers 9 are omitted from Figure 7 since they provide a special service not relevant to this discussion.

Since in Figure 7, pipe 1 is a straight run of pipe between pump 11 and heat exchanger 12, the free vertical deflection position (with no supports installed) of pipe 1 at room temperature (line 17) is a horizontal, straight line.

Design analysis of the system is assumed to provide line 18 which is the configuration of pipe 1 in the free (no supports installed) operating temperature condition. Note that pump 11 attachment 27 is known to drop 5 cm (2 inches) from room temperature to operating temperature, while the heat exchanger 12 attachment point 28 drops 3,3 cm (1,3 inches). In this particular arrangement, the pipe/free thermal expansion stresses at the operating temperature were found by analysis to be acceptable. This is not necessary for use of rigid link supports but merely occurs in this example.

With four rigid link supports (R1, R2, R3, R4) installed, pipe 1 is RT sprung to the deflection from line 17 represented by line 19, the RT sprung deflection. The number, locations, and lengths of rigid link supports R1, R2, R3, R4 are chosen to provide the RT sprung deflection of line 19 because, besides supporting pipe 1 at room temperature, these supports also position pipe 1 at the operating temperature along line 20 which is close to the free deflection line 18. Rigid link supports R1, R2, R3, and R4 are pulling pipe 1 upward, (from free position 18 to operating position 20) providing an operating temperature stress, defined as an "operating temperature sprung" or "OT sprung" condition, and providing pipe 1 with support in the Y direction (see coordinate axes in Figure 6).

A similar graph could be made of the XZ plane which would be used as a means to pick locations, lengths, and numbers of rigid link supports for support of pipe 1 in that plane.

Application of rigid link supports to vertical piping from the pump of a sodium cooled nuclear reactor entails a modification of the supports.

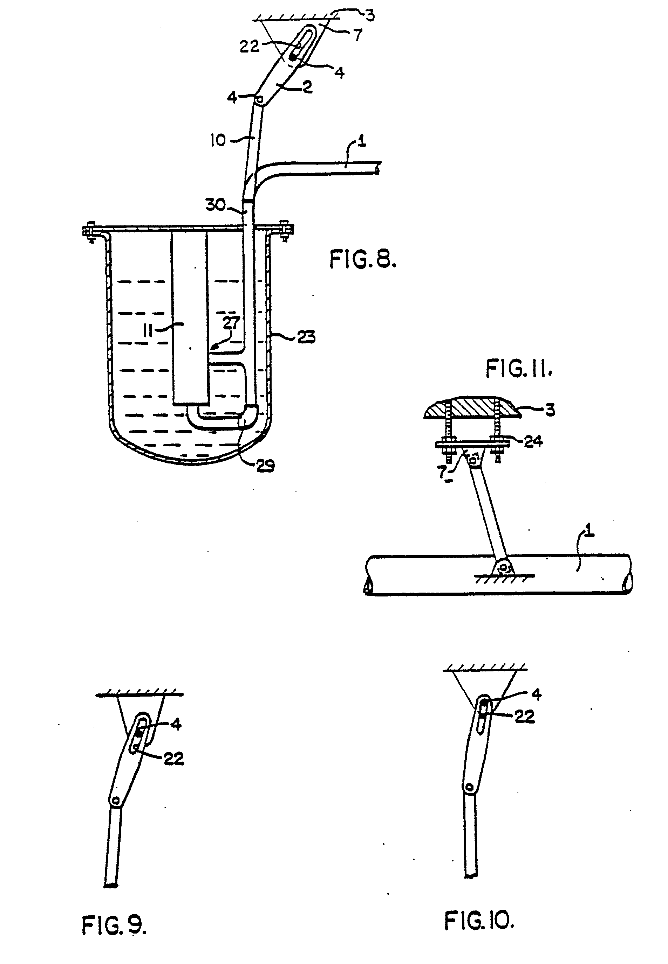

Refer to Figure 8 which shows pump 11 surrounded by a guard vessel 23. It is known that pipe support point 30 drops downward by 2.5 cm (1 inch) during heatup. It is desired to provide pipe 1 with vertical support at room temperature as well as after the 2,5 cm (1 inch) downward movement at operating temperature.

The use of a link in combination with 2,5 cm (1 inch) of vertical pump attachment 27 travel could overstress pipe 1, particularly at elbow 29. The solution is as follows; link 2 and upper mount 7 on anchor 3 has a slot 22. The lower mount 10 fixed to the pipe may be elongated to provide convenient access to pipe 1. Link 2 is attached to mounts 7 and 10 with pins 4.

In Figure 8, the support is shown in an RT sprung condition (pipe pushed down). As pipe 1 moves downward during heatup, as shown in Figure 9, the stress due to the RT sprung condition is relieved and for an additional range of travel of pipe 1 downward, corresponding to a range of the heatup, no further push or pull is generated because pin 4 is freely movable in slot 22. Figure 10 shows the configuration after the pipe 1 has reached the temperature where pipe 1 movement downward caused pin 4 to reach the end of slot 22. Further heatup will generate stress to support pipe 1. The overall effect of slot 22 is to reduce the portion of the 2,5 cm (1 inch) downward travel of pipe 1 which is used to generate pipe elbow 29 stress.

As shown in Figure 3, link 2 is perpendicular to pipe 1 when pipe 1 is at operating temperature wherein pipe 1 is under predetermined stress. It may well be desired however that link 2 at operating temperature would not yet have reached a 90° angle to pipe 1.

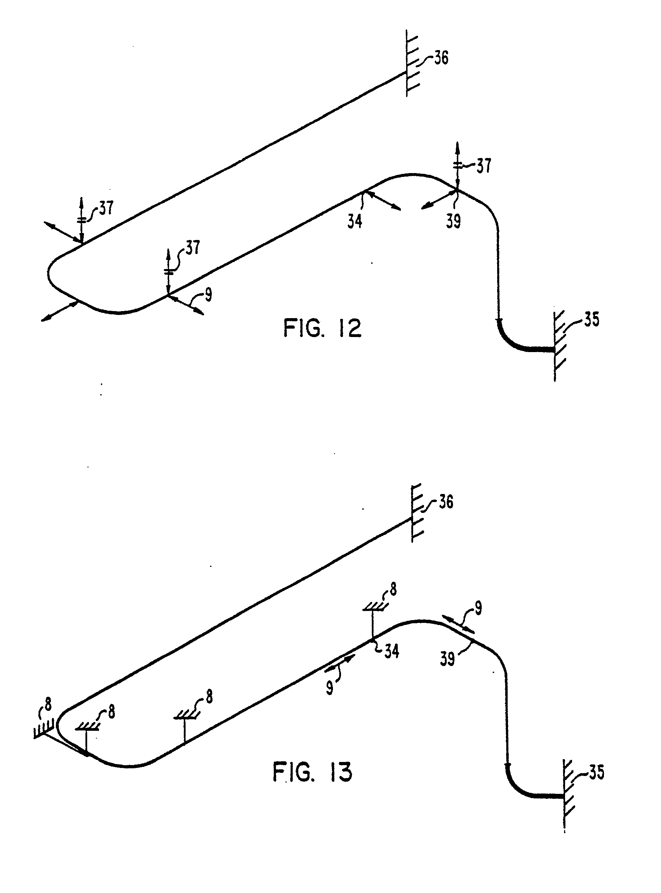

Figure 11 shows an adjustable link support, using a mount 7 having bolts and nuts 24 permitting adjustment of the standoff distance to anchor surface 3.

A primary use of rigid links will be to support piping in liquid metal fast breeder reactor (LMFBR) plants. The following describes an application to the pipe between a primary pump 35 and heat exchanger 36 of an LMFBR.

Figure 12 is the conventional arrangement with snubbers 9 and snubber and hanger combination 37.

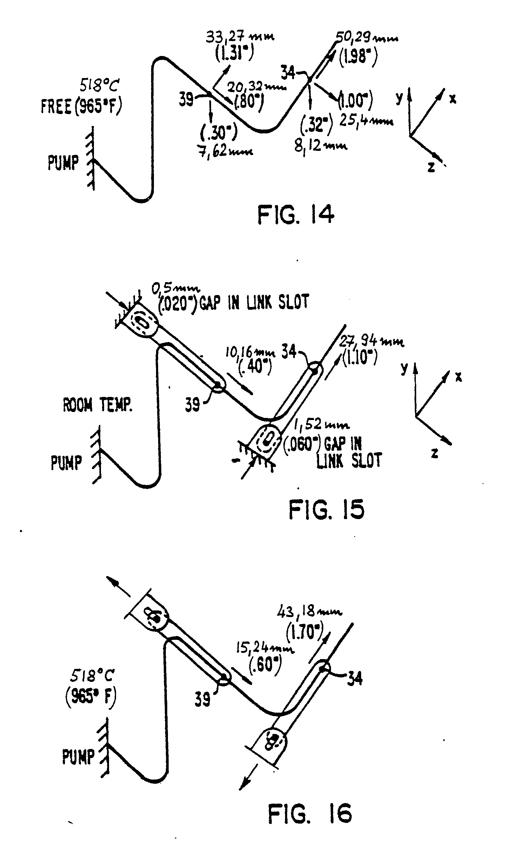

By applying the rigid link concept all three hangers and six of the eight snubbers can be replaced by four rigid links 8, Figure 13. The next step in this evolution is to eliminate the remaining two snubbers 9 by slotted rigid links. Figures 14, 15 and 16 show the mechanics of this approach. Figure 14 shows unrestrained movement of points 39 and 34 by thermal expansion as the piping system is heated up to 470°C. Fig. 15 shows that by cold springing point 39 in the z direction 1 cm. of the 2 cm. it would normally move to when heated to 470°C and by cold spring in a point 34 in the x direction 2.8 cm. of the 5 cm. it would normally move to when heated to 470°C the pipe will cause an elbow stress within a reasonable value. As the pipe heats up, the preloads at points 39 and 34 are reduced until about 315°C are reached where the preloads are zero. Somewhere around 400°C the rigid links at point 39 and 34 begin to restrain the thermal growth of the piping system. At full power, 470°C (Fig. 16) there is significant load at both points 39 and 34 but the highest elbow stress is less than $2,14 \times 10^8 N/m^2$ (2180 kg/cm²). A seismic analysis demonstrated that there was very little lift off and the resulting seismic stress were acceptable. Therefore, Figure 13 with the two snubbers replaced by gapped rigid links is a viable design. That is, in this particular piping loop three hangers and 8 snubbers were replaced by 6 links (two with gaps). The stress range was higher with

links $(-2,06\times10^8\text{N/m}^2$ $(-2100$ kg/cm) cold to $+3,0\times10^8\text{N/m}^2$ $(+3100$ kg/cm$^2)$ hot) compared to the conventional design $(0$ cold to $+2,06\times10^8\text{N/m}^2$ $(+30000$ PSI hot). But, if there are *not* many cycles back down to room temperature, this may not be a significant handicap.

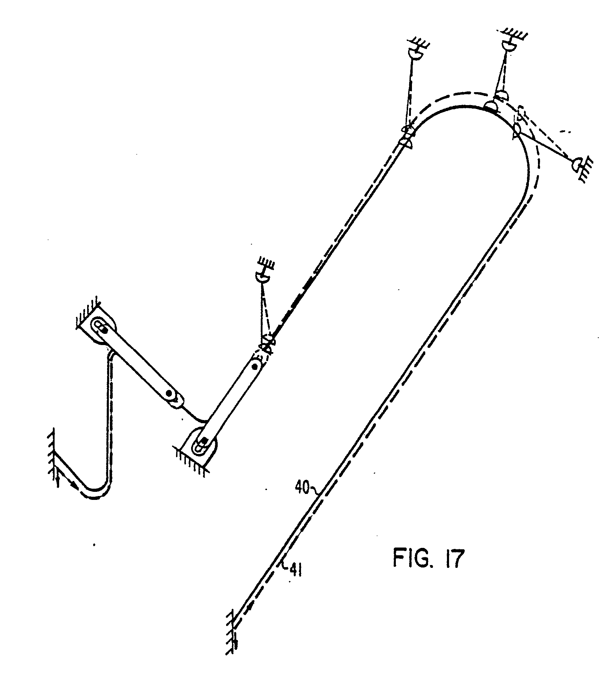

Figure 17 is a composite of Figures 13, through 16 which shows how the pipe shifts from cold (curve 40) to hot (curve 41).

With the arrangement described stresses at the connecting point of the pipe to the equipment may be relatively low at operating temperature so that breaks are not likely to occur during operation. Furthermore the piping is maintained by the solid links under stress so that vibrations are not likely to occur during earthquakes, for example.

## Claims

1. A support arrangement for a pipe (1) connected to equipment (11, 12) at a predetermined point (27, 28) which is subject to position changes depending on the temperature of the equipment and the pipe said support arrangement including rigid links (2) pivotally connected to said pipe (1) at axially spaced locations and to a support structure (3) adjacent said pipe for supporting said pipe (1) thereon, characterized in that the length and angular position of each link (2) relative to said pipe (1) is so selected that axial movement of said pipe (1) will cause said links (2) to apply stresses to said pipe so as to force said pipe (1) into a shape such that the end of said pipe connected to said equipment follows closely the movement of said equipment at the point of connection thereby to provide for relatively low stresses at said point of connection of said pipe (1) to said equipment and avoids stress peaks throughout said pipe, (1) and that at least one of said links (2) has a lost-motion connection (22, 4) with opposite end positions, the length of said lost motion connection being less than the respective pipe movement so that support forces are applied to said pipe (1) through said link (2) at equipment operating temperature through one end position of said lost-motion connection and at equipment shut-down temperature through the other end position of said lost-motion connection.

2. An arrangement as claimed in claim 1 wherein said pipe (1) is connected to said equipment at a point which is adapted to move essentially normal to the general extension of the pipe, (1) characterized in that said pipe links (2) are disposed at such an angle that axial movement of the pipe (1) as caused by expansion thereof will bend the pipe (1) such that its end moves with the equipment point to which it is connected.

3. An arrangement as claimed in claim 1 or 2 wherein said pipe (1) includes a U-shaped section, with first and second legs connected to said equipment, characterized in that the bight portion of said U-shaped section is supported by at least a first rigid pivot link (2) extending essentially normal to plane receiving said U-shaped pipe section and a second rigid pivot link (2) extending in said plane and essentially normal to said first rigid pivot link (Fig. 6 and 13).

4. An arrangement as claimed in claim 3, wherein said first leg includes essentially a 90° turn in the said U-shaped section plane, characterized in that two rigid links (2) with lost-motion connections are mounted to said pipe (1) near said 90° turn, each being oriented in the direction of said pipe, (1) one being arranged at one side of said 90° turn and the other at the other side thereof.

## Patentansprüche

1. Eine Befestigungsvorrichtung für eine Röhre (1), die mit einem Gerät (11, 12) an einem vorbestimmten Punkt (27, 28) verbunden ist, der abhängig von der Temperatur des Gerätes und der Röhre Lageänderungen unterworfen ist, wobei die genannten Befestigungsvorrichtung starre Glieder (2) enthält, die drehbar mit der genannten Röhre (1) gegenseitigem achsialem Abstand und mit einer Befestigungsstruktur (3) verbunden sind, die benachbart zur genannten Röhre liegt, um diese zu haltern, dadurch gekennzeichnet, daß die Länge und die Winkelposition jedes Gliedes (2) relativ zur genannten Röhre (1) so ausgewählt ist daß die achsiale Bewegung der genannten Röhre (1) die genannten Glieder (2) dazu veranlaßt, Spannungen auf die genannte Röhre auszuüben , um die genannte Röhre (1) in eine solche Form überzuführen, daß das mit dem genannten Gerät verbundene Ende der genannten Röhre der Bewegung des genannten Gerätes am Verbindungspunkt genau folgt, um am genannten Verbindungspunkt der genannten Röhre (1) zum genannten Gerät relativ geringe Spannungen hervorzurufen und überall in der ganzen Röhre (1) Spannungsspitzen zu vermeiden; und daß mindestens eines der genannten Glieder (2) eine Verbindung (22, 4) mit totem Spiel und zwei entgegengesetzt liegenden Endpositionen aufweist, wobei die Länge der genannten Verbindung mit totem Spiel kleiner als die jeweilige Bewegung der Röhre ist, so daß durch das genannte Glied (2) Haltekräfte auf die genannte Röhre (1) ausgeübt werden, und zwar bei der Betriebstemperatur des Gerätes durch die eine Endposition der genannten Verbindung mit totem Spiel und bei der Temperatur des Gerätes im ausgeschalteten Zustand durch die andere Endposition der genannten Verbindung mit totem Spiel.

2. Eine Vorrichtung nach Anspruch 1, bei der die genannte Röhre (1) mit dem genannten Gerät an einem Punkt verbunden ist, der dazu befähigt ist, sich im wesentlichen senkrecht zur allgemeinen Ausdehnung der Röhre (1) zu bewegen, dadurch gekennzeichnet, daß die genannten Röhrenglieder (2) unter einem solchen Winkel angeordnet sind daß die achsiale Bewegung der Röhre durch deren Ausdehnung die Röhre (1) so biegt, daß sich ihr Ende dem Punkt des Gerätes bewegt, an dem sie befestigt ist.

3. Eine Vorrichtung nach Anspruch 1 oder 2, bei der die genannte Röhre (1) einen U-förmigen Abschnitt umfaßt, dessen erste und zweite Schenkel mit dem genannten Gerät verbunden sind,

dadurch gekennzeichnet, daß der eingebuchtete Teil des genannten U-förmigen Abschnittes durch mindestens ein erstes starres Drehglied (2) gehaltert ist, das im westentlichen senkrecht zu einer Ebene verläuft, in der der genannte U-förmige Teil liegt und ein zweites starres Drehglied (2), das in der Ebene und im wesentlichen senkrecht zum ersten starren Drehglied verläuft (Fig. 6 und 13).

4. Eine Vorrichtung nach Anspruch 3, bei der der genannte erste Schenkel eine im wesentlichen 90 Grad-Biegung in der Ebene des genannten U-förmigen Teils aufweist, dadurch gekennzeichnet, daß die beiden starren Glieder (2) mit totes Spiel aufwiesenden Verbindungen in der Nähe der 90 Grad-Biegung auf der Röhre montiert sind, wobei jedes in Richtung der genannten Röhre (1) orientiert ist und eine auf einer Seite und die andere auf deren anderen Seite der genannten 90 Grad-Biegung liegt.

**Revendications**

1. Montage de support d'un tuyau (1) relié en un point déterminé (27, 28) à un équipement (11, 12), ce montage étant soumis à des changements de position en fonction de la température de l'équipement et du tuyau, ce montage de support comprenant des tiges de liaison rigides (2) reliées au tuyau (1) par des pivots en des points axialement espacés et à une structure de support (3) adjacente au tuyau (1) afin de le supporter, caractérisé en ce que la longueur et la position angulaire de chaque tige (2) de liaison par rapport au tuyau (1) sont choisies de telle façon que tout déplacement axial du tuyau (1) provoquera l'application de contraintes au tuyau par ces tiges de liaison (2) afin de forcer le tuyau (1) à prender une forme telle que son extrémité reliée à l'équipement suivra étroitement le déplacement de cet équipement au point de liaison, ce qui ne provoquera que des contraintes relativement faibles à ce point de liaison du tuyau (1) avec l'equipement et évitera des pointes de contrainte dans tout le tuyau (1), et en ce que l'une au moins de ces tiges (2) a une liaison à déplacement libre (22, 4) avec les points d'extrémités opposées, la longueur de cette liaison à déplacement libre étant inférieure au déplacement du tuyau respectif, de sorte que les forces de support sont appliquées au tuyau (1) par la tige (2) de liaison à la température de service de l'équipement par l'intermédiaire d'un point d'extrémité de la liaison à déplacement libre, et à la température d'arrêt de l'équipement par l'intermédiaire de l'autre point d'extrémité de cette liaison à déplacement libre.

2. Montage suivant la revendication 1, dans lequel la tuyau (1) est relié à l'équipement en un point qui est prévu pour se déplacer sensiblement à la normale du prolongement général du tuyau (1), caractérisé en ce que les tiges de liaison (2) du tuyau sont disposées à un angle tel que le déplacement axial du tuyau (1) causé par sa dilatation courbera le tuyau (1) de telle façon que son extrémité se déplacera avec le point de l'equipement auquel il est relié.

3. Montage suivant les revendications 1 ou 2, dans lequel le tuyau (1) comprend une section en forme d'U, dont la première et la deuxième branches sont reliées à l'équipement, caractérisé en ce que la partie courbe de la section en forme d'U est supportée par au moins une première tige rigide de liaison (2) à pivot qui se prolonge sensiblement normalement à un plan contenant la section de tuyau en forme d'U et une seconde tige rigide de liaison (2) à pivot que se prolonge dans ce plan et sensiblement normalement à la première tige rigide de liaison à pivot (figures 6 et 13).

4. Montage suivant la revendication 3, dans lequel la première branche comprend essentiellement un coude à 90° dans le plan de la section en forme d'U, caractérisé en ce que deux tiges rigides (2) de liaison à déplacement libre sont montées sur le tuyau (1) à proximité du coude à 90°, chacune d'elles étant orientée dans la direction du tuyau (1), l'une étant montée sur un côté du coude à 90° et l'autre sur l'autre côté de ce même coude.

ROOM TEMPERATURE

FIG.1.

ROOM TEMPERATURE

FIG.2.

$$D+\delta-b+C(1+\alpha\Delta T)$$

OPERATIVE TEMPERATURE

FIG.3.

ROOM TEMPERATURE

FIG.4.

OPERATING TEMPERATURE

FIG.5.

HEAT
EXCHANGER

FIG.6.

PUMP

FIG.7.

0 094 454

FIG. 8.

FIG. 11.

FIG. 9.

FIG. 10.

4

FIG. 12

FIG. 13

FIG. 14

FIG. 15

FIG. 16

40

41

FIG. 17